# EUROPEAN PATENT APPLICATION

(11) **EP 4 123 467 A1**
(43) Date of publication of application: **25.01.2023**
(21) Application number: 21783757.4
(22) Date of filing: 07.04.2021
(51) Int. Cl.: G06F 15/173

(54) **DATA TRANSMISSION METHOD AND APPARATUS**

(30) Priority: 10.04.2020 CN 202010277567
(71) Applicant: Huawei Technologies Co., Ltd., Shenzhen, Guangdong 518129 (CN)
(72) Inventor: CHEN, Jiankang, Shenzhen, Guangdong 518129 (CN); DING, Tianhong, Shenzhen, Guangdong 518129 (CN); LI, Zefan, Shenzhen, Guangdong 518129 (CN)
(74) Representative: Isarpatent
(86) International application number: PCT/CN2021/085798
(87) International publication number: WO 2021/204147

(57) **Abstract**

This application provides a data transmission method and apparatus, to improve data transmission efficiency between coprocessors to match computing power of an AI system. The method is applied to a computer system including at least two coprocessors, for example, including a first coprocessor and a second coprocessor. A shared memory is deployed between the first coprocessor and the second coprocessor, and is configured to store data generated when subtasks are separately executed. Further, the shared memory further stores a storage address of data generated when a subtask is executed, and a mapping relationship between each subtask and a coprocessor that executes the subtask. Therefore, a storage address of data to be read by the coprocessor may be found based on the mapping relationship, and the data may further be directly read from the shared memory without being copied by using a system bus. This improves efficiency of data transmission between the coprocessors.

## Description

### CROSS-REFERENCE TO RELATED APPLICATIONS

This application claims priority to Chinese Patent Application No. 202010277567.9, filed with the China National Intellectual Property Administration on April 10, 2020 and entitled "DATA TRANSMISSION METHOD AND APPARATUS", which is incorporated herein by reference in its entirety.

### TECHNICAL FIELD

Embodiments of this application relate to the field of communication technologies, and in particular, to a data transmission method and apparatus.

### BACKGROUND

Artificial intelligence (artificial intelligence, AI) has made great breakthroughs in application fields, such as speech recognition and computer vision. This also drives a conventional AI system including a central processing unit (central processing unit, CPU) to be replaced by an AI system including a CPU and an accelerator (for example, a graphics processing unit (graphics processing unit, GPU) and/or a neural-network processing unit (neural-network processing unit, NPU)). In an AI system, a connection is established between a CPU and an accelerator by using a system bus. If the accelerator needs to obtain data of another accelerator, the CPU needs to be used to copy the data for a plurality of times by using the system bus. For example, the data is first copied from one accelerator to the CPU, and then copied from the CPU to another accelerator. Because a bandwidth supported by the system bus is slowly increasing, efficiency of data transmission between accelerators cannot match improvement of computing power (that is, a computing capability) of the AI system.

Therefore, it is urgent to implement high-speed data transmission to match growth of the computing power of the AI system, so as to improve overall performance of the AI system.

### SUMMARY

Embodiments of this application provide a data transmission method and apparatus, to improve data transmission efficiency to match computing power of an AI system.

The following describes the method, an apparatus to which the method is applied, and the like by using different aspects. Implementations and beneficial effects of the following aspects can be cross-referenced.

According to a first aspect, this application provides a data transmission method. The method is applied to a computer system including at least two coprocessors, for example, including a first coprocessor and a second coprocessor. When needing to obtain, in a process of executing a first subtask, first data generated in a process in which the second coprocessor executes a second subtask, the first coprocessor determines, based on a mapping relationship, a first storage address used to store the first data. The mapping relationship includes an association relationship among an identifier of the second coprocessor, an identifier of the second subtask executed by the second coprocessor, and the first storage address. Then, the first coprocessor may read the first data from a first storage space corresponding to the first storage address. The first storage space is located in a shared memory between the first coprocessor and the second coprocessor.

The coprocessor (for example, the first coprocessor or the second coprocessor) in this application is usually an acceleration device for acceleration. The acceleration device includes a processor (briefly referred to as an accelerator) for acceleration. The accelerator may be one or more of a GPU, an NPU, a programmable logic gate array (field programmable gate array, FPGA), an application specific integrated circuit (application specific integrated circuit, ASIC), or a digital signal processor (digital signal processor, DSP). The accelerator usually belongs to a dedicated processor. The coprocessor provided in this application further includes a general-purpose processor such as a CPU, a microcontroller unit (microcontroller unit, MCU), or an application processor (application processor, AP).

In the conventional technology, when accelerators exchange data, the data is copied from a memory of one accelerator to a memory of another accelerator by using a system bus. As a result, overall performance of an AI system depends on a transmission capability of the system bus. In this application, a shared memory is deployed between the coprocessors. The shared memory is configured to store data generated when each coprocessor executes a subtask, that is, data that needs to be exchanged between the coprocessors (or accelerators). A storage address of the data generated when each coprocessor executes the subtask in the shared memory may be found in the mapping relationship. Based on this, a storage address of data of the second coprocessor to be read by the first coprocessor may be determined based on the mapping relationship, and the data may further be directly read from the shared memory based on the storage address of the data. The data does not need to be copied by using the system bus. This improves efficiency of data transmission between the coprocessors.

In a possible design, the first coprocessor may include a first processor and a second processor. The first processor may be the accelerator mentioned above. The second processor may be the general-purpose processor mentioned above. The first processor in the first coprocessor executes the first subtask. The first processor sends a first obtaining request to the second processor in the process of executing the first subtask. The first obtaining request is used to request to obtain the first data generated in the process in which the second coprocessor executes the second subtask. Then, after receiving the first obtaining request, the second processor determines, based on the mapping relationship, the first storage address of the first storage space used to store the first data, and may send the first storage address to the first processor. Finally, the first processor reads the first data from the first storage space corresponding to the first storage address.

In a possible design, the first coprocessor may include a task scheduling engine (task scheduling engine, TSE). The task scheduling engine stores program code. When determining, based on the mapping relationship, the first storage address used to store the first data, the first coprocessor may run the program code stored in the task scheduling engine to determine, based on the mapping relationship, the first storage address of the first storage space used to store the first data.

In an example, when the first coprocessor includes the first processor and the second processor, the second processor may run the program code stored in the task scheduling engine to determine, based on the mapping relationship, the first storage address of the first storage space used to store the first data.

In another example, the first coprocessor includes the first processor and the task scheduling engine. The task scheduling engine includes the second processor and stores the program code. The second processor runs the program code to determine, based on the mapping relationship, the first storage address of the first storage space used to store the first data. Alternatively, the task scheduling engine is implemented by a hardware circuit.

In still another example, the first coprocessor includes the first processor, the second processor, and the task scheduling engine. A processor is also deployed in the task scheduling engine, and may be referred to as a third processor for ease of differentiation. The second processor and the third processor work together to determine, based on the mapping relationship, the first storage address of the first storage space used to store the first data.

It should be noted that quantities of first processors and second processors included in the first coprocessor are not limited in this application.

In a possible design, the foregoing mapping relationship may be stored in the shared memory. The mapping relationship may be established in advance. If data generated when a coprocessor executes a subtask needs to be stored, the data may be stored based on the mapping relationship.

For example, second data is generated in the process in which the first coprocessor executes the first subtask. The second data needs to be stored, and a second storage address used to store the second data may be determined based on the mapping relationship. The mapping relationship includes an association relationship among an identifier of the first coprocessor, an identifier of the first subtask executed by the first coprocessor, and the second storage address. The second storage address corresponds to a second storage space in the shared memory. The second storage space is used to store the second data generated in the process in which the first coprocessor executes the first subtask. Further, the first coprocessor may store the second data in the second storage space corresponding to the second storage address. Therefore, if another coprocessor needs to obtain the second data, the another coprocessor may obtain, based on the mapping relationship, the second storage address of the second storage space used to store the second data, so that the data does not need to be copied by using the system bus. This improves efficiency of data transmission between the coprocessors.

In a possible design, the first coprocessor may run the program code in the task scheduling engine to determine, based on the mapping relationship, the second storage address used to store the second data.

In a possible design, the foregoing mapping relationship may be established in the process in which the coprocessor executes the subtask. After data of the subtask is stored, a mapping relationship item may be added based on a storage address of the data. For example, the first coprocessor generates the second data in the process of executing the first subtask, determines the second storage space in the shared memory, and stores the second data in the second storage space. The second storage space corresponds to the second storage address. Then, the association relationship among the identifier of the first coprocessor, the identifier of the first subtask executed by the first coprocessor, and the second storage address is added to the mapping relationship. Therefore, if another coprocessor needs to obtain the second data, the another coprocessor may obtain, based on the mapping relationship, the second storage address of the second storage space used to store the second data, so that the data does not need to be copied by using the system bus. This improves efficiency of data transmission between the coprocessors.

In a possible design, the first coprocessor may run the program code in the task scheduling engine, to add the association relationship among the identifier of the first coprocessor, the identifier of the first subtask executed by the first coprocessor, and the second storage address to the mapping relationship.

In a possible design, the first coprocessor receives the first subtask delivered by a main processor, and starts to execute the first subtask. The foregoing coprocessors (including the first coprocessor and the second coprocessor) are included in the AI system. The AI system may further include the main processor. The main processor herein may be a CPU. The main processor may be configured to split a task, and deliver a split subtask to the coprocessor, so that the coprocessor assists the main processor in executing the task, thereby improving computing power of the AI system. In the foregoing design, the main processor delivers the subtask to the coprocessor, that is, triggers the coprocessor to execute the subtask.

In a possible design, the main processor may send a start condition of the subtask to the coprocessor when delivering the subtask to the coprocessor. The first coprocessor is used as an example. The first coprocessor receives a start condition of the first subtask and the first subtask delivered by the main processor. When the start condition of the first subtask is met, the first coprocessor starts to execute the first subtask. In the foregoing design, the main processor delivers the start condition to the coprocessor, so that the coprocessor determines whether the start condition is met, and then starts to execute the subtask when determining that the start condition is met.

The start condition may also be referred to as start time. For example, the start condition may include but is not limited to one or more of the following conditions:
(1) Duration for receiving the subtask reaches preset duration.
(2) A preset time point is reached.
(3) A timer corresponding to starting of the task times out.
(4) A previous subtask that is serially executed is executed.

According to a second aspect, this application provides a coprocessor (for example, the first coprocessor or the second coprocessor in the first aspect). The coprocessor may also be considered as an independent chip or a partial structure in a chip. The coprocessor may also be referred to as a co-processing device, an acceleration device, or the like in some scenarios.

Because a plurality of coprocessors are involved, for ease of differentiation during description, the coprocessor is referred to as the first coprocessor in this aspect. Specifically, the first coprocessor includes at least a first processor and a second processor. The first processor may be configured to execute a subtask. The second processor may be configured to manage the first processor. For example, the first processor may be an accelerator, and the second processor may be a CPU or another type of general-purpose processor.

The first processor is configured to send: in a process of executing a first subtask, a first obtaining request to the second processor when first data generated in a process in which the second coprocessor executes the second subtask needs to be obtained. The first obtaining request is used to request to obtain the first data generated in the process in which the second coprocessor executes the second subtask. The second processor is configured to determine, based on a mapping relationship, a first storage address of a first storage space used to store the first data, and send the first storage address to the first processor. The mapping relationship includes an association relationship among an identifier of the second coprocessor, an identifier of the second subtask executed by the second coprocessor, and the first storage address. The first processor is configured to read the first data from the first storage space corresponding to the first storage address. The first storage space is located in a shared memory between the first coprocessor and the second coprocessor.

In a possible design, the first coprocessor may further include a task scheduling engine. The task scheduling engine stores program code. The second processor is specifically configured to run the program code stored in the task scheduling engine, to determine, based on the mapping relationship, the first storage address of the first storage space used to store the first data, and send the first storage address to the first processor. In some other possible designs, the task scheduling engine may alternatively be implemented by a hardware circuit.

In a possible design, the first processor is further configured to: when storing second data generated in the process of executing the first subtask, send a second obtaining request to the second processor. The second obtaining request is used to request a storage space used to store the second data.

The second processor is further configured to: after receiving the second obtaining request, determine a second storage address based on the mapping relationship, and send the second storage address to the first processor.

The mapping relationship further includes an association relationship among an identifier of the first coprocessor, an identifier of the first subtask executed by the first coprocessor, and the second storage address. The second storage address corresponds to a second storage space. The second storage space is used to store the second data generated in the process in which the first coprocessor executes the first subtask.

The first processor is further configured to store the second data in the second storage space corresponding to the second storage address.

In a possible design, the second processor is specifically configured to run the program code stored in the task scheduling engine, to determine the second storage address based on the mapping relationship, and send the second storage address to the first processor.

In a possible design, the first processor is further configured to: when storing second data generated in the process of executing the first subtask, send a third obtaining request to the second processor. The third obtaining request is used to request a storage space used to store the second data.

The second processor is further configured to: after receiving the second obtaining request, allocate a second storage space to the first processor, where the second storage space corresponds to the second storage address; notify the first processor of a second storage address, and add an association relationship among an identifier of the first coprocessor, an identifier of the first subtask executed by the first coprocessor, and the second storage address to the mapping relationship.

The first processor is further configured to store the second data in the second storage space corresponding to the second storage address.

In a possible design, the second processor is specifically configured to run the program code stored in the task scheduling engine, to add the association relationship among the identifier of the first coprocessor, the identifier of the first subtask executed by the first coprocessor, and the second storage address to the mapping relationship.

In a possible design, the second processor is further configured to: receive the first child task delivered by a main processor, and send the first subtask to the first processor. The first processor is further configured to: when receiving the first subtask, start to execute the first subtask.

In a possible design, the second processor is further configured to: receive a start condition of the first subtask and the first subtask delivered by a main processor, send the first subtask to the first processor, and when determining that the start condition of the first subtask is met, trigger the first processor to execute the first subtask. The first processor is further configured to: receive the first subtask, and start to execute the first subtask when triggered by the second processor.

For beneficial effects of any one of the second aspect and the designs of the second aspect, refer to beneficial effects of any one of the first aspect and the designs of the first aspect. Details are not described herein again.

According to a third aspect, this application provides a computer system. The computer system may also be referred to as an AI system. The computer system includes at least a first coprocessor and a second coprocessor. The computer system may include another coprocessor. A quantity of coprocessors included in the computer system is not limited in this application.

Specifically, the first coprocessor is configured to execute a first subtask. The second coprocessor is configured to execute a second subtask. The first coprocessor is further configured to: in a process of executing the first subtask, when first data generated in a process in which the second coprocessor executes the second subtask needs to be obtained, determine, based on a mapping relationship, a first storage address used to store the first data, and read the first data from a first storage space corresponding to the first storage address. The mapping relationship includes an association relationship among an identifier of the second coprocessor, an identifier of the second subtask executed by the second coprocessor, and the first storage address. The first storage space is located in a shared memory between the first coprocessor and the second coprocessor.

The first coprocessor and the second coprocessor may be deployed in one chip, or may be deployed in different chips. When the first coprocessor and the second coprocessor are deployed in a same chip, the computer system may also be understood as a chip system.

In a possible design, the first coprocessor is further configured to: generate second data in the process of executing the first subtask, and determine a second storage address based on the mapping relationship, where the mapping relationship further includes an association relationship among an identifier of the first coprocessor, an identifier of the first subtask executed by the first coprocessor, and the second storage address; the second storage address corresponds to a second storage space; the second storage space is used to store the second data generated in the process in which the first coprocessor executes the first subtask; and store the second data in the second storage space corresponding to the second storage address.

In a possible design, the first coprocessor is further configured to: generate second data in the process of executing the first subtask, and store the second data in a second storage space, where the second storage space corresponds to a second storage address; and add an association relationship among an identifier of the first coprocessor, an identifier of the first subtask executed by the first coprocessor, and the second storage address to the mapping relationship.

In a possible design, the computer system further includes a main processor. The main processor is configured to split a to-be-processed task, for example, split the to-be-processed task into two subtasks: a first subtask and a second subtask, so that the main processor delivers the first subtask to the first coprocessor, and delivers the second subtask to the second coprocessor.

In a possible design, the main processor, the first coprocessor, and the second coprocessor may be deployed in different chips. For example, the computer system includes two chips. One chip includes a main processor, and the other chip includes at least two coprocessors, for example, the first coprocessor and the second coprocessor.

In a possible design, the main processor is further configured to deliver a start condition of the first subtask to the first coprocessor, and deliver a start condition of the second subtask to the second coprocessor.

The first coprocessor is specifically configured to: when determining that the start condition of the first subtask is met, start to execute the first subtask.

The second coprocessor is specifically configured to: when determining that the start condition of the second subtask is met, start to execute the second subtask.

In a possible design, the first coprocessor includes a first processor and a second processor. The first processor is configured to execute the subtask. The second processor is configured to manage the first processor.

The second processor is configured to: receive the start condition of the first subtask and the first subtask from the main processor, and send the first subtask to the first processor. The second processor is further configured to: when determining that the start condition of the first subtask is met, trigger the first processor to execute the first subtask. The first processor is configured to execute the first subtask when triggered by the second processor.

In the foregoing design, at least two processors are disposed in the coprocessor. One processor has a control function, and another processor is configured to execute the subtask. This can reduce interaction with the main processor, and improve communication performance.

In a possible design, the first processor is further configured to perform an operation performed by the first processor according to any one of the second aspect or the designs of the second aspect. The second processor is further configured to perform an operation performed by the second processor according to any one of the second aspect or the designs of the second aspect. For details, refer to the descriptions in any one of the second aspect or the designs of the second aspect. Details are not described herein again.

According to a fourth aspect, an embodiment of this application provides a computer program product. The computer program product includes computer program code. When the computer program code is run by a coprocessor, the coprocessor is enabled to perform the method according to any one of the first aspect or the possible implementations of the first aspect.

According to a fifth aspect, an embodiment of this application provides a computer-readable storage medium. The computer-readable storage medium stores a program, and the program enables a coprocessor to perform any method according to any one of the first aspect or the possible implementations of the first aspect.

According to a sixth aspect, an embodiment of this application provides a computer program. When the computer program is executed on a computer, the computer is enabled to implement any method according to any one of the first aspect or the possible implementations of the first aspect.

According to a seventh aspect, an embodiment of this application provides a chip system. The chip system includes one or more coprocessors according to any one of the second aspect or the possible designs of the second aspect.

For technical effects that can be achieved in the second aspect to the seventh aspect, refer to the foregoing analysis and descriptions in the first aspect and the possible designs of the first aspect. Details are not described herein again.

### BRIEF DESCRIPTION OF DRAWINGS

FIG. 1 is a schematic diagram of an implementation method of a GPU direct technology according to an embodiment of this application;
FIG. 2 is a schematic diagram of an implementation method of an NVlink technology according to an embodiment of this application;
FIG. 3 is a schematic diagram of an implementation method of a Direct GPU technology according to an embodiment of this application;
FIG. 4 is a schematic diagram of an architecture of a computer system according to an embodiment of this application;
FIG. 5 is a schematic diagram of an architecture of another computer system according to an embodiment of this application;
FIG. 6 is a schematic flowchart of a data transmission method according to an embodiment of this application;
FIG. 7 is a schematic diagram of an architecture of still another computer system according to an embodiment of this application; and
FIG. 8 is a flowchart of a task execution process of a neural network according to an embodiment of this application.

### DESCRIPTION OF EMBODIMENTS

Some terms in this application are first described, to help a person skilled in the art have a better understanding.

### (1) Shared virtual memory (shared virtual memory, SVM)

A manner of sharing a virtual memory is to map a physical memory to respective virtual address spaces of different processes. In this way, each process can read a same copy of data, to implement process communication. Because communication is implemented through a memory operation, this is a most efficient data exchange method.

### (2) Process (Process)

The process is a running activity of a program in a computer about a data set. It is a basic unit for a system to allocate and schedule resources and a foundation of an operating system structure. The process is a basic execution entity of a program. The program is a description of an instruction, data, and an organizational form thereof.

### (3) Cache (cache) coherence

A cache is also referred to as a cache. Cache coherence refers to a mechanism that ensures that data in a cache is the same as data in a main memory in a computer system that uses a hierarchical storage system.

To improve efficiency of data transmission between accelerators in an existing AI system, there are two possible solutions. One solution is to use a GPU direct (direct) technology and an NVlink technology, and the other solution is to use a direct (Direct) GPU/FPGA technology. An accelerator used in an AI system deployed by using the GPU direct technology and the NVlink technology is a GPU. Accelerators used in an AI system deployed by using the Direct GPU/FPGA technology are a GPU and an FPGA.

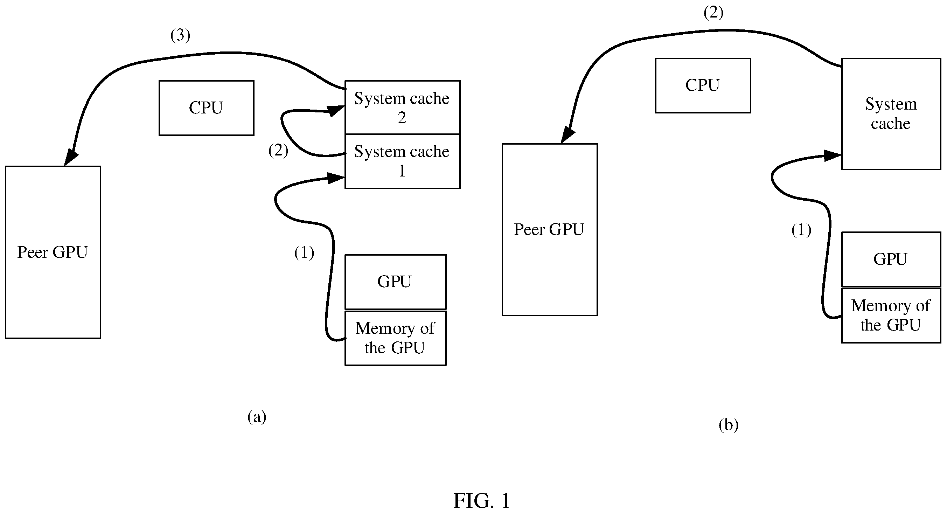

Before the GPU direct technology is used, the GPU functions as an independent device. To implement communication between the GPUs, data needs to be copied for three times. As shown in (a) in FIG. 1, data being copied for three times is respectively as follows: A CPU first copies memory data of a GPU 1 to a system cache 1, then copies the memory data from the system cache 1 to a system cache 2, and finally copies the memory data to a memory of a peer GPU 2. The system cache 1 corresponds to the GPU 1. The system cache 2 corresponds to the GPU 2. This frequent data copying greatly limits a computing capability of the GPU because the GPU needs to wait for a long time for a peer end to copy data. However, in the GPU direct technology, a plurality of GPUs are directly connected to the CPU by using a serial computer extended bus (peripheral component interconnect express, PCIe). The GPU supports a manner of sharing the memory on the CPU side through the PCIe, thereby implementing data communication between the GPUs. As shown in (b) in FIG. 1, GPU direct needs to copy data for only two times: the CPU first copies data from a memory of the GPU to a system cache, and then copies the data from the system cache to a memory of a peer GPU through the PCle. The GPU direct increases a data transmission rate through the serial computer extended bus.

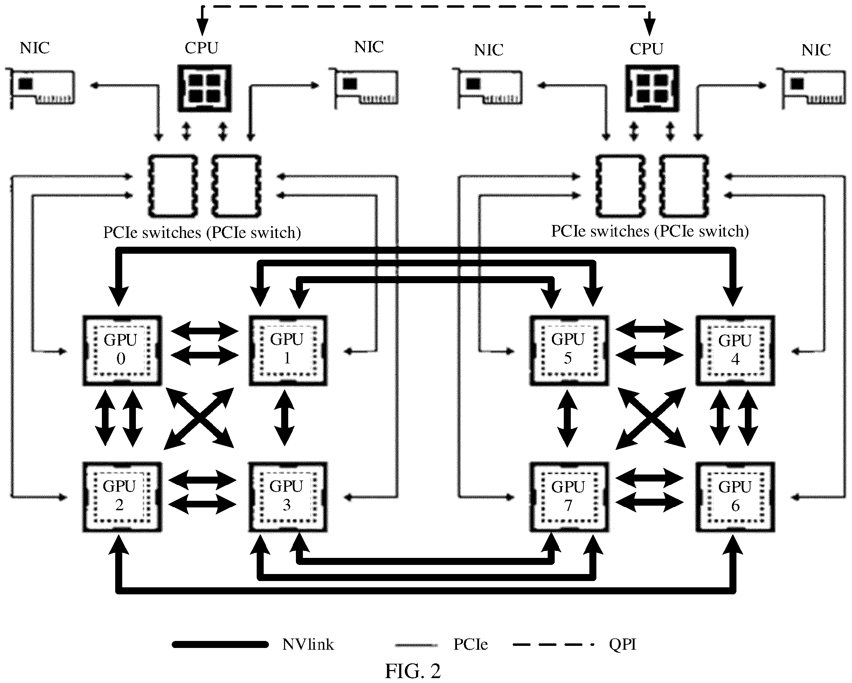

The PCIe has bidirectional bandwidth limits. To improve the data transmission rate between a plurality of GPUs, the NVlink technology is developed. The NVlink technology is a bus with a higher bandwidth than the PCIe and a transmission protocol of the bus. An NVlink provides a bandwidth of up to 20 GB/s. As shown in FIG. 2, in the NVlink technology, a bidirectional NVlink bus channel is added between the GPUs, and data may be copied between the GPUs through the NVlink bus channel, so that the data does not need to be copied by using the CPU.

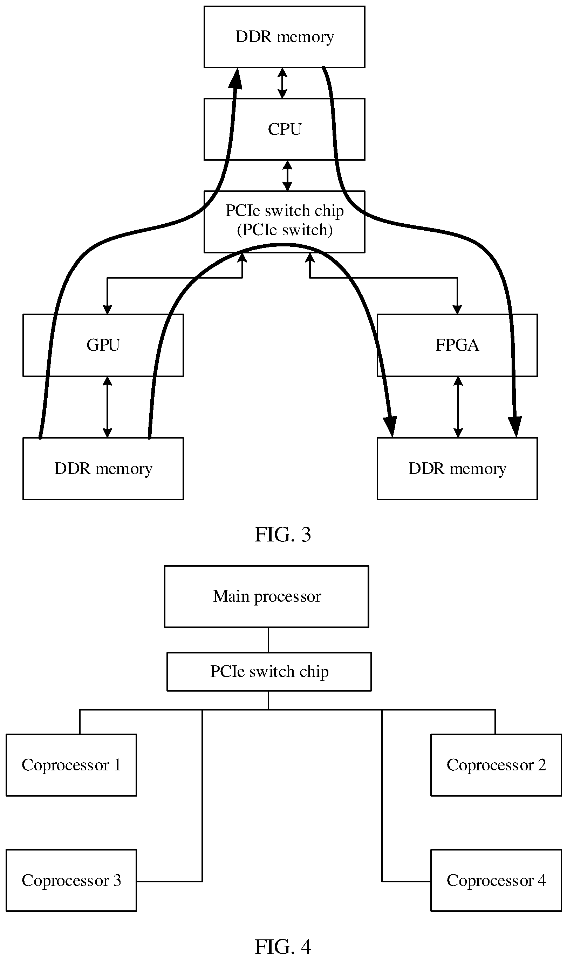

In the Direct GPU/FPGA technology, the GPU and the FPGA are connected to the CPU through a PCIe bus, and data is exchanged between the GPU and the FPGA through the PCIe bus. As shown in FIG. 3, if the GPU needs to copy data from a double data rate memory (double data rate memory, DDR memory) of the FPGA, the GPU may directly copy the data from the DDR memory of the FPGA through the PCIe bus without using the CPU.

It can be learned from the foregoing that, in the foregoing two technologies, although a computing capability of the accelerator (for example, the GPU or another type of acceleration device) can be improved to some extent, data needs to be exchanged between the accelerators through the system bus (for example, the PCIe bus or an NVlink bus) in the foregoing two solutions. However, a bandwidth supported by the system bus is limited, and a computing capability of the AI system is still limited by the bandwidth supported by the system bus. As a result, a data transmission capability between the accelerators cannot match growth of the computing capability of the AI system.

In view of this, embodiments of this application provide a data transmission method and apparatus. Specifically, a solution of direct communication between accelerators is used, to bypass a limitation of a bus on a computing capability of the accelerator.

FIG. 4 is a schematic diagram of an architecture of a computer system according to an embodiment of this application. The computer system includes a main processor and M coprocessors. M is an integer greater than 1. The coprocessor in this embodiment of this application includes at least an accelerator. The main processor and the coprocessor are located in different chips. The M coprocessors may be deployed in different chips, or may be deployed in a same chip, or may be deployed in X chips. X is an integer less than M and greater than 1. The main processor and the coprocessor are connected through a system bus. The system bus is responsible for inter-device communication. For example, the system bus may be a PCIe bus, or may be another type of bus. This is not specifically limited in this embodiment of this application. For example, in FIG. 4, the main processor is connected to the coprocessor, and the coprocessors are connected by using a PCIe switch chip. The PCIe switch chip is a switch (switch) chip that provides a PCIe connection. The processor and the coprocessor may be connected through a fast bus that ensures cache (cache) coherence. The fast bus can be a Huawei cache coherence system (Huawei cache coherence system, HCCS), an advanced extensible interface (advanced extensible interface, AXI), a hyper transport and quick path interconnect (Hyper transport and quick path interconnect, Hyper transport and QPI), or an advanced microcontroller bus architecture (advanced microcontroller bus architecture, AMBA). In FIG. 4, for example, M = 4, to be specific, four coprocessors are respectively a coprocessor 1 to a coprocessor 4.

Each coprocessor corresponds to a globally unique device identifier (ID) in the computer system. The device ID may be configured, or may be allocated by the main processor to each coprocessor. For example, after the computer system is started, the main processor allocates the device ID to each coprocessor, and synchronizes the device ID corresponding to each coprocessor to each coprocessor through the system bus. That is, the main processor sends, to the coprocessor 1 to the coprocessor 4, the device IDs which respectively correspond to the coprocessor 1 to the coprocessor 4, so that each coprocessor can obtain the device ID of each coprocessor in the computer system.

After obtaining a computing task, the main processor splits the computing task into N subtasks. N is less than or equal to M. In an example, the N subtasks are concurrently executed. In this case, the main processor selects N coprocessors based on the device ID of each coprocessor, and separately distributes the N subtasks to the N coprocessors for processing. In another example, some subtasks in the N subtasks are concurrently executed, and some subtasks need to be executed after other subtasks are executed, that is, serially executed. In this case, several coprocessors may be selected based on a requirement for processing, and the subtasks are separately distributed to the selected coprocessors.

There is a shared memory between the N coprocessors. The shared memory may be configured to store data generated by the coprocessor in a process of executing the subtask. In a manner, the shared memory may be configured by the main processor for each coprocessor by using an SVM technology. In another manner, there is a shared storage device between the coprocessors. The shared storage device includes the foregoing shared memory. The shared storage device may be implemented by one or more memories. In an example, one or more memories may be disposed in the computer system independently of each coprocessor. In another example, a memory is disposed in each coprocessor, the memories included in the coprocessors are connected to each other through the fast bus that ensures cache coherence, and are shared by using an SVM technology, to form the shared memory.

In the process of executing the subtask, the coprocessor stores, in the shared memory, data generated through execution of the subtask. In a process of executing the subtask, if one coprocessor requires data generated in a process in which another coprocessor executes the subtask, the coprocessor may obtain, based on a mapping relationship, a storage address of data of a subtask processed by the device ID of the another coprocessor, and then read the data from a storage space corresponding to the storage address. When the coprocessor reads the data from the storage space corresponding to the storage address, a direct memory access (direct memory access, DMA) technology or another data reading technology may be used for implementation. For related descriptions of the DMA technology, refer to the conventional technology. Details are not described in this application.

The foregoing mapping relationship includes the device ID of each coprocessor, an identifier of the subtask executed by each coprocessor, and a storage address of a storage space used to store data generated in a process in which each coprocessor executes the subtask. The mapping relationship may be stored in the shared memory. The storage address of the storage space stored in the mapping relationship may be notified to each coprocessor when the mapping relationship is configured. A specific configuration manner and a specific maintenance manner of the mapping relationship are described in detail subsequently, and details are not described herein again.

An example in which the coprocessor 1 is configured to execute a subtask 1, and the coprocessor 2 is configured to execute a subtask 2 is used. For example, in a process in which the coprocessor 1 executes the subtask 1, first data generated in a process in which the coprocessor 2 executes the subtask 2 needs to be obtained. For example, the first data is stored in a first storage space of the shared memory. A storage address of the first storage space is a first storage address. The mapping relationship includes an association relationship among the device ID of the coprocessor 2, the identifier of the subtask 2 executed by the coprocessor 2, and the first storage address. Further, the coprocessor 1 may determine, based on the mapping relationship, the first storage address used to store the first data, and read the first data from the first storage space corresponding to the first storage address. The first storage space is storage space in the shared memory.

The following describes the specific configuration manner and the specific maintenance manner of the mapping relationship.

The mapping relationship may be configured in a table manner, may be configured in an array manner, or certainly may be configured in another manner. This is not specifically limited in this application. The following describes how to configure the mapping relationship in the table manner in subsequent configuration. For ease of description, a table obtained by configuring the mapping relationship is referred to as an address information table. When the mapping relationship is configured in the table manner, the mapping relationship may be configured in a manner of one or more tables, that is, the address information table may include one or more tables.

For example, the coprocessor 1 executes the subtask 1, the coprocessor 2 is configured to execute the subtask 2, the coprocessor 3 is configured to execute a subtask 3, and the coprocessor 4 is configured to execute a subtask 4. The device ID of the coprocessor 1 is ID 1, the device ID of the coprocessor 2 is ID 2, the device ID of the coprocessor 3 is ID 3, and the device ID of the coprocessor 4 is ID 4. The identifier of the subtask 1 is AI, the identifier of the subtask 2 is A2, the identifier of the subtask 3 is A3, and the identifier of the subtask 4 is A4.

In an example, the mapping relationship is configured in a manner of one table, that is, the address information table includes one table. Table 1 describes an association relationship among the device ID of the coprocessor, the identifier of the subtask executed by each coprocessor, and a storage address of data generated in the process of executing the subtask. The storage address of the data herein may be a physical address of a storage space for storing the data, or a virtual address corresponding to the physical address, or may include an association relationship between the virtual address and the physical address of the data. The association relationship between the virtual address and the physical address is the relationship described in an address translation table. In other words, the mapping relationship may describe an association relationship among the device ID of the coprocessor, the identifier of the subtask executed by each coprocessor, and an address translation table corresponding to the data generated in the process of executing the subtask. Establishment of the address translation table may be statically configured or dynamically generated, which is specifically similar to allocation and mapping of an existing virtual address and physical address. Details are not described in this application.

**Table 1**

| Device ID | Subtask ID | Virtual address | Physical address |
|---|---|---|---|
| ID 1 | A1 | V1 | P1 |
| | A1 | V2 | P2 |
| | A1 | V3 | P3 |
| ID 2 | A2 | V4 | P4 |
| | A2 | V5 | P5 |
| | A2 | V6 | P6 |
| ID 3 | A3 | V7 | P7 |
| | A3 | V8 | P8 |
| | A3 | V9 | P9 |
| ID 4 | A4 | V10 | P10 |
| | A4 | V11 | P11 |
| | A4 | V12 | P12 |

In another example, the mapping relationship is configured in a manner of a plurality of tables. Implementation of two tables is used as an example. Table 2 describes an association relationship between the device ID of the coprocessor and the identifier of the subtask executed by each coprocessor. Table 3 describes an address translation table corresponding to the identifier of each subtask. The address translation table describes a mapping relationship between the virtual address and the physical address.

**Table 2**

| Device ID | Subtask ID |
|---|---|
| ID 1 | A1 |
| ID 2 | A2 |
| ID 3 | A3 |
| ID 4 | A4 |

**Table 3**

| Subtask ID | Virtual address | Physical address |
|---|---|---|
| A1 | V1 | P1 |
| | V2 | P2 |
| | V3 | P3 |
| A2 | V4 | P4 |
| | V5 | P5 |
| | V6 | P6 |
| A3 | V7 | P7 |
| | V8 | P8 |
| | V9 | P9 |
| A4 | V10 | P10 |
| | V11 | P11 |
| | V12 | P12 |

In still another example, Table 4 describes an association relationship among the device ID of the coprocessor, the identifier of the subtask executed by each coprocessor, and a storage address used to store the address translation table. Table 5 describes an address translation table corresponding to data stored in each coprocessor.

**Table 4**

| Device ID | Subtask ID | Storage address |
|---|---|---|
| ID 1 | A1 | Address 1 |
| ID 2 | A2 | Address 2 |
| ID 3 | A3 | Address 3 |
| ID 4 | A4 | Address 3 |

**Table 5**

| Storage address of the address translation table | Virtual address | Physical address |
|---|---|---|
| Address 1 | V1 | P1 |
| | V2 | P2 |
| | V3 | P3 |
| Address 2 | V4 | P4 |
| | V5 | P5 |
| | V6 | P6 |
| Address 3 | V7 | P7 |
| | V8 | P8 |
| | V9 | P9 |
| Address 4 | V10 | P10 |
| | V11 | P11 |
| | V12 | P12 |

In a possible implementation, the mapping relationship may be established by the main processor, or may be established by the coprocessor, or may be collaboratively established by the main processor and the coprocessor.

In an example, the mapping relationship is established by the main processor, and is notified to each coprocessor. For example, the mapping relationship shown in Table 1 is used as an example. After being started, the main processor may create the mapping relationship shown in Table 1 after allocating the device ID and the subtask to each coprocessor, and then may notify each coprocessor.

In another example, the mapping relationship is established by the coprocessor. A specific coprocessor that establishes the mapping relationship may be indicated by the main processor, or may be preconfigured.

In the foregoing two examples, the mapping relationship is established before the coprocessor executes the subtask. If the coprocessor generates data in a process of executing the subtask, the coprocessor may determine, based on the mapping relationship, a storage address used to store the data. Herein, an example in which the coprocessor 1 is configured to execute the subtask 1, and the coprocessor 2 is configured to execute the subtask 2 is still used. As described above, in the process in which the coprocessor 1 executes the subtask 1, when needing to obtain the first data generated in the process in which the coprocessor 2 executes the subtask 2, the coprocessor 1 may determine, based on the mapping relationship, the first storage address used to store the first data, and read the first data from the first storage space corresponding to the first storage address.

If the coprocessor 1 generates second data in the process of executing the subtask 1, the coprocessor 1 may determine, based on the mapping relationship, a storage address used to store the second data.

The mapping relationship shown in Table 1 is used as an example. The coprocessor 1 determines, based on the mapping relationship, the storage address used to store the second data. For example, the virtual address is V1, and the physical address is V2. V2 corresponds to a second storage space in the shared memory, that is, the second storage space is used to store the second data generated in the process in which the coprocessor 1 executes the subtask 1. Further, the coprocessor 1 stores the second data in the second storage space corresponding to V2.

In still another example, the mapping relationship is cooperatively established by the main processor and the coprocessor. The mapping relationship may be established and updated by the coprocessor in the process of executing the subtask with assistance of the main processor. For example, the device ID of each coprocessor and the identifier of the subtask are sent by the main processor to each coprocessor. The address translation table may be created and updated by each coprocessor in the process of executing the subtask. When the mapping relationship is stored in the manner of a plurality of tables, some of the plurality of tables may be established by the main processor and notified to each coprocessor, and the other tables may be established and updated by the coprocessor in the process of executing the subtask. For example, Table 2 or Table 4 is created by the main processor and notified to each coprocessor. Content in Table 3 or Table 5 is created and updated by each coprocessor in the process of executing the subtask.

In the foregoing example, the mapping relationship is not established before the coprocessor executes the subtask. After the coprocessor generates data in the process of executing the subtask, the coprocessor may obtain, from the shared memory, the storage space used to store the data, then store the data in the storage space, and add an association relationship between an address of the storage space, the coprocessor, and the subtask to the mapping relationship.

An example in which the coprocessor 1 is configured to execute the subtask 1, and the coprocessor 2 is configured to execute the subtask 2 is still used.

If the coprocessor 1 generates the second data in the process of executing the subtask 1, the coprocessor 1 determines the second storage space in the shared memory. The second storage space is an idle memory in the shared memory. Then, the second data is stored in the second storage space. The second storage space corresponds to a second storage address. For example, the second storage address corresponds to V2-P2. Therefore, the coprocessor 1 may add an association relationship among an identifier (ID 1) of the first coprocessor, an identifier (A1) of the first subtask executed by the first coprocessor, and the second storage address (V2-P2) to the mapping relationship.

In a possible implementation, when the coprocessor starts to execute the subtask, for example, starts execution when triggered by the main processor, the coprocessor may start to execute the subtask when determining that a start condition is met.

The foregoing coprocessor 1 is used as an example. In an example, the main processor delivers the subtask 1 to the coprocessor 1. The coprocessor 1 receives the subtask 1, and then starts to execute the subtask. In another example, the main processor delivers the subtask 1 and a start condition of the subtask 1 to the coprocessor 1, so that the coprocessor 1 starts to execute the first subtask when determining that the start condition of the subtask 1 is met.

The start condition may also be referred to as start time. For example, the start condition may include but is not limited to one or more of the following conditions:
(1) Duration for receiving the subtask reaches preset duration.
(2) A preset time point is reached.
(3) A timer corresponding to starting of the task times out.
(4) A previous subtask that is serially executed is executed.

In this application, the coprocessors are connected to each other through the fast bus that ensures cache coherence, and then data required for executing the subtask is read through the fast bus based on the mapping relationship, without being copied through the system bus or by using a CPU. In addition, compared with a PCIe bus, the fast bus has a higher bandwidth and a small delay, and can further improve a data transmission capability of the computer system.

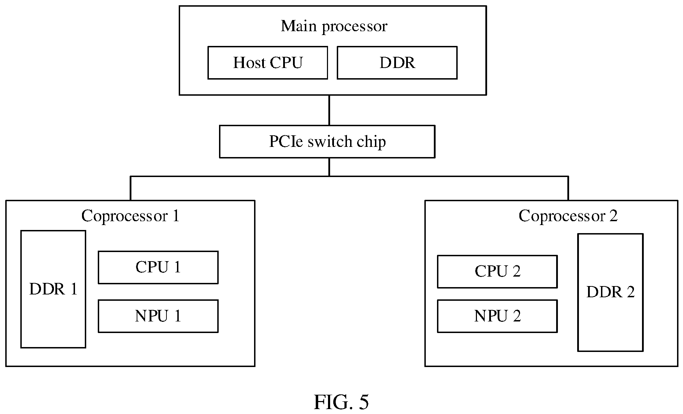

As shown in FIG. 5, the solutions provided in embodiments of this application are described in detail with reference to a specific application scenario by using an example in which the computer system includes two coprocessors. The computer system may also be referred to as an AI system. The main processor in the computer system may include a main processing unit and a storage unit. For example, the main processing unit may be implemented by one or more processors. For example, the main processing unit is implemented by the CPU. The CPU of the main processing unit is referred to as a host (Host) CPU. The storage unit may be a DDR. The coprocessor may include a processing unit and a storage unit. The processing unit may be implemented by one or more processors (or referred to as accelerators), for example, implemented by one or more of a CPU, a GPU, an FPGA, an NPU, or a digital signal processor (digital signal processor, DSP). The coprocessor may further include a management unit, configured to manage the processing unit and the storage unit in the coprocessor. The management unit in the coprocessor may be implemented by one or more processors, for example, a CPU. The storage unit in the coprocessor may be a DDR. In FIG. 5, for example, the computer system includes two coprocessors: the coprocessor 1 and the coprocessor 2. The description is provided by using an example in which the processing unit of the coprocessor is the NPU and the management unit is the CPU. Specifically, the coprocessor 1 includes a CPU 1, an NPU 1, and a DDR 1. The coprocessor 2 includes a CPU 2, an NPU 2, and a DDR 2. The main processor and the coprocessor may be connected through the fast bus that ensures cache coherence. It may be understood that the host CPU, the CPU 1, the CPU 2, the NPU 1, and the NPU 2 are connected through the fast bus, to form a cache coherence system. The DDR 1, the DDR 2, and the DDR form a shared memory system.

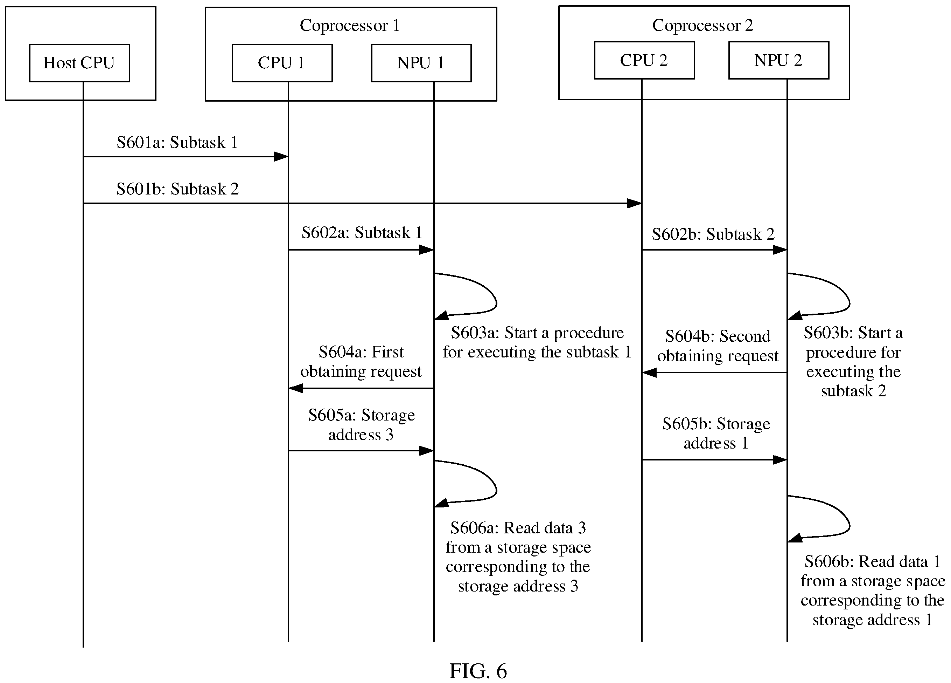

FIG. 6 is a schematic flowchart of a data transmission method according to this application based on the computer system shown in FIG. 5. A to-be-processed task on the main processor is split into a subtask 1 and a subtask 2 to be stored in a DDR of the main processor.

S601a: A host CPU delivers the subtask 1 to the coprocessor 1. In other words, the subtask 1 is migrated from the DDR to the DDR 1 by the host CPU of the main processor.

S601b: The host CPU delivers the subtask 2 to the coprocessor 2. In other words, the subtask 2 is migrated from the DDR to the DDR 2 by the host CPU of the main processor.

The two steps S601a and S601b may be concurrently implemented.

S602a: After receiving the subtask 1, the CPU 1 in the coprocessor 1 sends the subtask 1 to the NPU 1.

S603a: The NPU 1 starts a procedure for executing the subtask 1, and stores generated data in a shared memory.

In a process of executing the subtask 1, the coprocessor 1 generates intermediate data, for example, data 1 and data 2. The data 1 is stored in a storage space corresponding to a storage address 1. The data 2 is stored in a storage space corresponding to a storage address 2. The data 1 is required during running of the subtask 2.

S602b: After receiving the subtask 2, the CPU 2 in the coprocessor 2 sends the subtask 2 to the NPU 2.

For example, the coprocessor 2 sends the subtask 2 to the NPU 2. Specifically, the CPU 2 may store the subtask 2 in the DDR 2, and then notify the NPU 2 of a storage address, so that the NPU 1 reads and executes the subtask 2 based on the storage address notified by the CPU 2.

S603b: The NPU 2 starts a procedure for executing the subtask 2, and stores generated data in the shared memory.

In a process of executing the subtask 2, the coprocessor 2 also generates intermediate data, for example, data 3 and data 4. The data 3 is stored in a storage space corresponding to a storage address 3. The data 4 is stored in a storage space corresponding to a storage address 4. The data 3 is required during running of the subtask 1.

S604a: The NPU 1 sends, in the process of executing the subtask 1, a first obtaining request to the CPU 1 when needing to obtain the data 3 generated in the process in which the NPU 2 executes the subtask 2. The first obtaining request is used to request to obtain the data 3 generated in the process in which the coprocessor 2 executes the subtask 2.

S605a: The CPU 1 determines, based on a mapping relationship, the storage address 3 of the storage space used to store the data 3, and sends the storage address 3 to the NPU 1.

S606a: The NPU 1 reads the data 3 from the storage space corresponding to the storage address 3, and then continues to execute the subtask 1 based on the data 3.

S604b: The NPU 2 sends, in the process of executing the subtask 2, a second obtaining request to the CPU 2 when needing to obtain the data 1 generated in the process in which the NPU 1 executes the subtask 1. The second obtaining request is used to request to obtain the data 1 generated in the process in which the coprocessor 1 executes the subtask 1.

S605b: The CPU 2 determines, based on the mapping relationship, the storage address 1 of the storage space used to store the data 1, and sends the storage address 1 to the NPU 2.

S606b: The NPU 2 reads the data 1 from the storage space corresponding to the storage address 1, and then continues to execute the subtask based on the data 1.

Establishment of the mapping relationship is described above. Details are not described herein again.

In a possible implementation, the main processor or a processing unit in a coprocessor may trigger an NPU to start to execute the subtask. The NPU 1 is used as an example.

In an example, the host CPU sends the subtask 1 to the CPU 1. When receiving the subtask 1, the CPU 1 starts to execute the subtask 1.

In another example, the CPU 1 receives a start condition of the subtask 1 and the subtask 1 delivered by the main processor, sends the subtask 1 to the NPU 1, and when determining that the start condition of the subtask 1 is met, triggers the NPU 1 to execute the subtask 1. After receiving the subtask 1, the NPU 1 starts to execute the subtask 1 when triggered by the CPU 1.

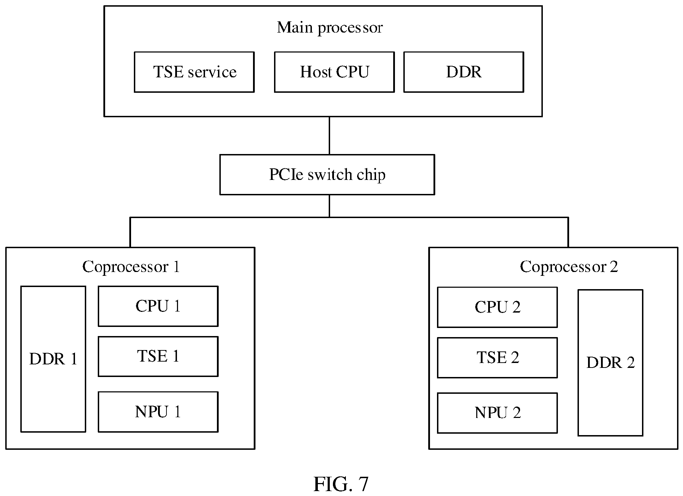

As shown in FIG. 7, a task scheduling engine (task scheduling engine, TSE) service (service) may be configured in the main processor. The TSE service may run on the main processor in a form of software, or may be deployed as a hardware circuit on the main processor, or may be deployed on the main processor as a combination of software and hardware. A TSE is deployed on each coprocessor. The TSE may run on a CPU of the coprocessor in a form of software, or may be deployed as a hardware circuit on the coprocessor, or may run on the coprocessor as a combination of software and hardware. For example, the main processor is a host CPU. When the TSE service runs on the host CPU in a form of software, the TSE service may be a service process running on the host CPU, and is configured to manage the TSE on the coprocessor. The TSE on the coprocessor determines, configures, and starts to copy data, and determines a communication mode of the NPU 1 (or NPU 2). For example, the main processor is the host CPU. When the TSE service runs on the host CPU as a combination of software and hardware, the TSE service may be firmware (firmware) running on the main processor. The firmware is generally stored in an electrically erasable programmable read-only memory (electrically erasable programmable read-only memory, EEPROM) or a flash (flash) chip in a device. Generally, a firmware program cannot be directly read or modified by a user. For another example, the TSE may run on the coprocessor in a form of software. The TSE may be a thread or a process. For still another example, when the TSE runs on the coprocessor as a combination of software and hardware, the TSE may be firmware running on the coprocessor. Deployment manners of the TSE service and the TSE are not limited in this embodiment of this application.

To facilitate the following description, a TSE of the coprocessor 1 is referred to as a TSE 1, and a TSE of the coprocessor 2 is referred to as a TSE 2.

When the computer system is started or initialized, an operating system on the main processor is started. The main processor starts the TSE service by using the operating system, and then the TSE service starts the TSE on each coprocessor of the computer system by using a PCIe switch chip. The TSE service configures a globally unique device ID for each coprocessor in the computer system, and sends the device ID to the TSE of each coprocessor. For example, the device ID of the coprocessor 1 is ID1, and the device ID of the coprocessor 2 is ID2.

When receiving a to-be-processed task triggered by the user, the TSE service splits the to-be-processed task into two subtasks. The two subtasks are respectively a Task A and a Task B. The Task A is allocated to the NPU 1, and the Task B is allocated to the NPU 2.

In a possible implementation, an example in which the main processor creates an address information table is used to describe a process in which the NPU 1 and the NPU 2 execute the subtask and obtain data.

The TSE service pre-creates a mapping relationship between a virtual address and a physical address, and creates the address information table based on the device ID of each coprocessor, an identifier of a processed subtask, and the created mapping relationship between the virtual address and the physical address. After the address information table is created, a manner is as follows: The TSE service may store the created address information table in a shared memory system, and notify the TSE of each coprocessor of a storage address for storing the address information table. Another manner is follows: The TSE service may send the created address information table to the TSE of each coprocessor.

After splitting the to-be-processed task into the Task A and the Task B, the TSE service sends the Task A to the TSE 1 of the coprocessor 1, and sends the Task B to the TSE 2 of the coprocessor 2. After receiving the Task A, the TSE 1 sends, to the NPU 1, a trigger instruction used to trigger the NPU 1 to execute the Task A. Specifically, a virtual address (for example, V1) corresponding to the Task A may be carried in the trigger instruction and sent to the NPU 1. The NPU 1 may query, based on V1, the TSE 1 for data of the to-be-executed Task A and a physical address of an execution instruction. The TSE 1 queries, based on an address translation table managed by the TSE 1, the data of the Task A and the physical address of the execution instruction, for example, P1, and sends the data and the physical address to the NPU 1. Therefore, the NPU 1 reads the data of the Task A and the execution instruction from a storage space corresponding to P1, to execute the Task A. Similarly, the NPU 1 reads data of the Task B and the execution instruction, to execute the Task B.

In a process of executing the Task A, when intermediate data is generated during each round of execution of the Task A, the NPU 1 queries the TSE 1 for a storage address for storing the intermediate data. The TSE 1 queries the address information table to obtain the storage address for storing the intermediate data, for example, P1, and sends P1 to the NPU 1, so that the NPU 1 stores the intermediate data in the storage space corresponding to P1. Similarly, in a process of executing the Task B, when intermediate data is generated during each round of execution of the Task B, the NPU 2 queries the TSE 2 for a storage address for storing the intermediate data. The TSE 2 queries the address information table to obtain the storage address for storing the intermediate data, for example, P4, and sends P4 to the NPU 2, so that the NPU 2 stores the intermediate data in a storage space corresponding to P4.

If the intermediate data generated when the NPU 1 executes the Task A needs to be used in a process in which the NPU 2 continues to execute the Task B, the NPU 2 queries the address information table by using the TSE 2, to determine an address 1 used to store an address translation table 1. The TSE 2 determines, from the address translation table 1 stored in a first memory space corresponding to the address 1, a physical address used to store the intermediate data generated when the NPU 1 executes the Task A. Then, the TSE 2 reads, from the physical address, the intermediate data generated when the NPU 1 executes the Task A.

In another possible implementation, an example in which the coprocessor allocates the storage space in the process of executing the subtask and maintains the address information table is used to describe the process in which the NPU 1 and the NPU 2 execute the subtask and obtain the data. For example, the address information table is in a form shown in Table 4 and Table 5.

The TSE service allocates a storage space to each coprocessor, so that each coprocessor stores an address translation table (Table 5) corresponding to the coprocessor. The TSE service may create Table 4, and then notify each coprocessor of a storage address of the created Table 4. Therefore, each coprocessor can determine a storage address of an address translation table of another coprocessor.

For example, as shown in Table 4, the TSE service allocates the first memory space in the shared memory to the coprocessor 1, and allocates a second memory space to the coprocessor 2. A storage address of the first memory space is the address 1. A storage address of the second memory space is an address 2. The TSE service notifies the TSE 1 of the coprocessor 1 and the TSE 2 of the coprocessor 2 of the address 1 and the address 2. Further, the TSEs on the coprocessor 1 and the coprocessor 2 respectively create address translation tables of the coprocessor 1 and the coprocessor 2, and store the address translation tables in the memory spaces corresponding to the addresses allocated by the TSE service.

The TSE 1 of the coprocessor 1 establishes the address translation table 1 in the first memory space corresponding to the address 1. The TSE of the coprocessor 2 establishes the address translation table 2 in the second memory space corresponding to the address 2.

The TSE service respectively sends the Task A and the Task B to the TSE of the coprocessor 1 and the TSE of the coprocessor 2, so that the TSE 1 of the coprocessor 1 triggers the NPU 1 to execute the Task A, and the TSE 2 of the coprocessor 2 triggers the NPU 2 to execute the Task B. The NPU 1 stores, in the process of executing the Task A, the intermediate data generated during each round of execution of the Task A in the DDR 1. Similarly, the NPU 2 stores, in the process of executing the Task B, the intermediate data generated during execution of the Task B in the DDR 2. If the intermediate data generated when the NPU 1 executes the Task A needs to be used in the process in which the NPU 2 continues to execute the Task B, the NPU 2 queries the address information table by using the TSE 2, to determine the address 1 used to store the address translation table 1. The TSE 2 determines, from the address translation table 1 stored in the first memory space corresponding to the address 1, the physical address used to store the intermediate data generated when the NPU 1 executes the Task A. Then, the TSE 2 reads, from the physical address, the intermediate data generated when the NPU 1 executes the Task A.

For example, the TSE service first split a total task into subtasks and delivers the subtasks to a coprocessor side. Data of the subtasks is also delivered to the coprocessor side. The TSE on the coprocessor side performs initial setting. After the storage space is allocated in the memory to data generated in a process in which the NPU executes the subtask, the NPU in each coprocessor start to execute the subtask. After each round of iterative computation is completed, generated data is used as input data of a next round of iteration. For example, the TSE 1 allocates, in the DDR 1, a storage space to the data generated in the process in which the NPU 1 executes the subtask. Similarly, the TSE 2 allocates, in the DDR 2, a storage space to the data generated in the process in which the NPU 2 executes the subtask. After storing intermediate data generated in each round, the NPU 1 notifies the TSE 1 of the stored physical address and stores the physical address in the address translation table 1. After receiving a notification, the TSE 1 may store, in the address translation table 1, the physical address of the intermediate data generated by the NPU 1 and the virtual address corresponding to the physical address. In addition, after the address translation table 1 managed by the TSE 1 is updated, the TSE 1 may notify the TSE service that the address translation table 1 managed by the TSE 1 has been updated, and notify, by using the TSE service, the TSE in each coprocessor of a message that the address translation table 1 managed by the TSE 1 has been updated.

It should be noted that a virtual address range is configured on the TSE 1. When receiving the notification that the NPU 1 stores the physical address of the intermediate data, the TSE 1 may select the virtual address based on the virtual address range, and correspondingly store the selected virtual address and the physical address in the address translation table 1.

Further, the TSE 1 notifies the TSE 2 of the virtual address corresponding to the physical address of the intermediate data. If the intermediate data generated when the NPU 1 executes the Task A needs to be used in the process in which the NPU 2 continues to execute the Task B, the NPU 2 notifies the TSE 2 that the intermediate data generated when the NPU 1 executes the Task A needs to be used. The TSE queries the address information table to determine the address 1 used to store the address translation table 1. The TSE 2 determines, from the address translation table 1 stored in the first memory space corresponding to the address 1, based on the virtual address sent by the TSE 1, the physical address used to store the intermediate data generated when the NPU 1 executes the Task A. Then, the TSE 2 reads, from the physical address, the intermediate data generated when the NPU 1 executes the Task A.

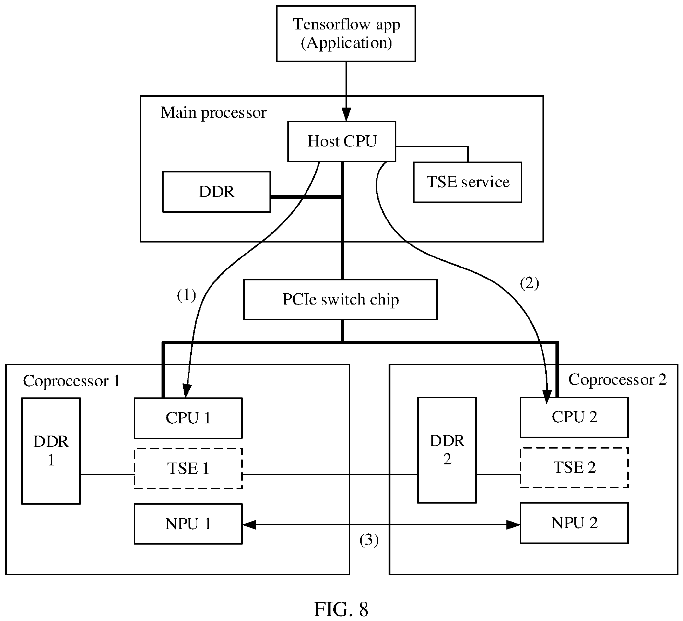

In an example, a tensorflow application (application, APP) runs on the host CPU, and two layers of neural networks need to be computed. Tensorflow is an open-source software library for numerical computation using data flow graphs (data flow graphs). A second-layer neural network needs to be applied to a computation result of a first-layer neural network during computation. As shown in FIG. 8, the tensorflow app runs on the host CPU. When the host CPU detects that the tensorflow app starts to run, the TSE service in the host CPU is triggered. The TSE service splits a computing task of the tensorflow app into two computing tasks. (1) One computing task is delivered to the NPU 1 by using the TSE 1 of the coprocessor 1 for computation. (2) The other computing task is delivered to the NPU 2 by using the TSE 2 of the coprocessor 2 for computation. It should be noted that the computing task of each layer of neural network is split into two parts. Therefore, two NPUs concurrently perform computation of the first-layer neural network and then concurrently perform computation of the second-layer neural network.

First, the TSE service allocates the device IDs to the coprocessor 1 and the coprocessor 2, and sends the device IDs to the TSE 1 and the TSE 2. The TSE 1 and the TSE 2 respectively generate the address translation tables. A specific generation manner is described above. Details are not described herein again.

Second, both the NPU 1 and the NPU 2 start computation of the first-layer neural network.

In a process of computing the first-layer neural network in the subtask 1, the NPU 1 queries the address translation table 1 by using the local TSE 1, to find a physical address of data and a physical address of an instruction of the first-layer neural network. The physical address is dynamically requested by the NPU in the computation process or is built and allocated by the CPU in advance. Then, the NPU 1 starts to compute the first-layer neural network in the subtask 1. After computing the first-layer neural network in the subtask 1, the NPU 1 stores a computation result of the first-layer neural network in the DDR 1. The NPU 1 notifies the TSE 1 of a physical address 1 of the computation result of the first-layer neural network in the subtask 1. The TSE 1 allocates a virtual address 1 to the computation result of the first-layer neural network in the subtask 1, and correspondingly stores the allocated virtual address 1 and the allocated physical address in the address translation table 1. The TSE 1 notifies the TSE 2 of the virtual address 1 of the computation result of the first-layer neural network in the subtask 1.

Similarly, in a process of computing the first-layer neural network in the subtask 2, the NPU 2 queries the address translation table 2 by using the local TSE 2, to find a physical address of data and a physical address of an instruction of the first-layer neural network, and starts to compute the first-layer neural network in the subtask 2. After computing the first-layer neural network in the subtask 2, the NPU 2 stores a computation result of the first-layer neural network in the DDR 2. The NPU 2 notifies the TSE 2 of a physical address 2 of the computation result of the first-layer neural network in the subtask 2. The TSE 2 allocates a virtual address 2 to the computation result of the first-layer neural network in the subtask 2, and correspondingly stores the allocated virtual address 2 and the allocated physical address 2 in the address translation table 2. The TSE 2 notifies the TSE 1 of the virtual address 2 of the computation result of the first-layer neural network in the subtask 2.

Finally, the NPU 1 and the NPU 2 start to compute the second-layer neural network.

(3) The NPU 1 and the NPU 2 respectively obtain subtask data generated by each other by using the TSE. Both the NPU 1 and the NPU 2 require the computation results of the first-layer neural network in the subtask 1 and the first-layer neural network in the subtask 2. The NPU 1 starts to compute the second-layer neural network. The NPU 1 queries the address information table by using the TSE 1, to determine an address 2 used to store the address translation table 2. The TSE 1 determines, based on the virtual address 2 sent by the TSE 2, the physical address 2 from the address translation table 2 stored in the second memory space corresponding to the address 2. Then, the TSE 1 reads the computation result of the first-layer neural network in the subtask 2 from the physical address 2. Similarly, the NPU 2 may read the computation result of the first-layer neural network in the subtask 1 by using the TSE 2. Further, the NPU 1 performs computation on the second-layer neural network in the subtask 1 based on the computation results of the first-layer neural network in the subtask 1 and the first-layer neural network in the subtask 2. The NPU 2 performs computation on the second-layer neural network in the subtask 2 based on the computation results of the first-layer neural network in the subtask 1 and the first-layer neural network in the subtask 2.

According to the solutions provided in this application, a high-bandwidth memory (High-bandwidth Memory, HM) Link management technology is implemented. A TSE (task scheduling engine) is separately added to the coprocessor and the main processor. For differentiation, the TSE on the main processor is referred to as the TSE service. The engine can accurately and quickly identify all devices connected to an HM link, globally manage storage addresses of all task data, and quickly set destination and source addresses of to-be-copied data based on a service interface, thereby implementing high-speed data transmission between the devices without a PCIe. An HM-Link technology is used, so that data does not need to be obtained and exchanged by using the PCIe during data exchange between the coprocessors, that is, zero copy of data is implemented. The coprocessor can directly read the data in the shared memory.

The technical solutions in this application may be applied to a data flowchart processing process of a machine learning platform and a deep learning platform, and may be further applied to another distributed computing platform having a data exchange requirement, for example, a graph computing platform or a stream computing platform.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

In embodiments of this application, "at least one" means one or more, and "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, it should be understood that "first", "second", "third", and the like in this application are merely used for distinguishing expressions, and are not intended to limit a sequence. In addition, a first object and a second object may be combined or refer to a same object in some cases. Further, because there is no limited sequence, there may be no first, and there may be second or third.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A data transmission method, wherein the method is applied to a first coprocessor and comprises:
in a process of executing a first subtask, determining, based on a mapping relationship, a first storage address used to store first data, wherein the mapping relationship comprises an association relationship among an identifier of a second coprocessor, an identifier of a second subtask executed by the second coprocessor, and the first storage address, and the first data is data generated in a process in which the second coprocessor executes the second subtask; and
reading the first data from a first storage space corresponding to the first storage address, wherein
the first storage space is located in a shared memory between the first coprocessor and the second coprocessor.

2. The method according to claim 1, wherein the first coprocessor comprises a task scheduling engine, and the task scheduling engine stores program code; and
the determining, based on a mapping relationship, a first storage address used to store first data, wherein the mapping relationship comprises an identifier of the second coprocessor, comprises:
running, by the first coprocessor, the program code stored in the task scheduling engine, to determine, based on the mapping relationship, the first storage address of the first storage space used to store the first data.

3. The method according to claim 1 or 2, further comprising:
generating second data in the process of executing the first subtask, and determining a second storage address based on the mapping relationship, wherein
the mapping relationship further comprises an association relationship among an identifier of the first coprocessor, an identifier of the first subtask executed by the first coprocessor, and the second storage address, the second storage address corresponds to a second storage space, the second storage space is used to store the second data, and the second storage space is located in the shared memory; and
storing the second data in the second storage space.

4. The method according to claim 1 or 2, further comprising:
generating second data in the process of executing the first subtask, determining a second storage space in the shared memory, and storing the second data in the second storage space, wherein the second storage space corresponds to a second storage address; and
adding an association relationship among an identifier of the first coprocessor, an identifier of the first subtask executed by the first coprocessor, and the second storage address to the mapping relationship.

5. The method according to any one of claims 1 to 4, wherein the method further comprises:
receiving the first subtask delivered by a main processor, and starting to execute the first subtask.

6. The method according to any one of claims 1 to 4, wherein the method further comprises:
receiving a start condition of the first subtask and the first subtask delivered by a main processor; and
starting to execute the first subtask when the start condition of the first subtask is met.

7. The method according to any one of claims 1 to 6, wherein the mapping relationship is stored in the shared memory.

8. A first coprocessor, comprising a first processor and a second processor, wherein
the first processor is configured to send a first obtaining request to the second processor in a process of executing a first subtask, wherein the first obtaining request is used to request to obtain first data generated in a process in which a second coprocessor executes a second subtask;
the second processor is configured to determine, based on a mapping relationship, a first storage address of a first storage space used to store the first data, and send the first storage address to the first processor, wherein
the mapping relationship comprises an association relationship among an identifier of the second coprocessor, an identifier of the second subtask executed by the second coprocessor, and the first storage address; and
the first processor is configured to read the first data from the first storage space corresponding to the first storage address, wherein
the first storage space is located in a shared memory between the first coprocessor and the second coprocessor.

9. The first coprocessor according to claim 8, wherein the first coprocessor further comprises a task scheduling engine, and the task scheduling engine stores program code; and
the second processor is specifically configured to run the program code stored in the task scheduling engine, to determine, based on the mapping relationship, the first storage address of the first storage space used to store the first data, and send the first storage address to the first processor.

10. The first coprocessor according to claim 8 or 9, wherein
the first processor is further configured to: when storing second data generated in the process of executing the first subtask, send a second obtaining request to the second processor, wherein the second obtaining request is used to request a storage space used to store the second data;
the second processor is further configured to: after receiving the second obtaining request, determine a second storage address based on the mapping relationship, and send the second storage address to the first processor, wherein
the mapping relationship further comprises an association relationship among an identifier of the first coprocessor, an identifier of the first subtask executed by the first coprocessor, and the second storage address, the second storage address corresponds to a second storage space, and the second storage space is used to store the second data generated in the process in which the first coprocessor executes the first subtask; and
the first processor is further configured to store the second data in the second storage space corresponding to the second storage address.

11. The first coprocessor according to claim 8 or 9, wherein
the first processor is further configured to: when storing second data generated in the process of executing the first subtask, send a third obtaining request to the second processor, wherein the third obtaining request is used to request a storage space used to store the second data;
the second processor is further configured to: after receiving the second obtaining request, allocate a second storage space to the first processor, wherein the second storage space corresponds to the second storage address; notify the first processor of a second storage address, and add an association relationship among an identifier of the first coprocessor, an identifier of the first subtask executed by the first coprocessor, and the second storage address to the mapping relationship; and
the first processor is further configured to store the second data in the second storage space corresponding to the second storage address.

12. The first coprocessor according to any one of claims 8 to 11, wherein
the second processor is further configured to: receive the first subtask delivered by a main processor, and send the first subtask to the first processor; and
the first processor is further configured to: when receiving the first subtask, start to execute the first subtask.

13. The first coprocessor according to any one of claims 8 to 11, wherein
the second processor is further configured to: receive a start condition of the first subtask and the first subtask delivered by a main processor, send the first subtask to the first processor, and when determining that the start condition of the first subtask is met, trigger the first processor to execute the first subtask; and
the first processor is further configured to: receive the first subtask, and start to execute the first subtask when triggered by the second processor.

14. The first coprocessor according to any one of claims 8 to 13, wherein the first processor is an accelerator, and the second processor is a general-purpose processor.

15. A computer system, comprising a first coprocessor and a second coprocessor, wherein
the first coprocessor is configured to execute a first subtask;
the second coprocessor is configured to execute a second subtask; and
the first coprocessor is further configured to: in a process of executing the first subtask, determine, based on a mapping relationship, a first storage address used to store first data, and read the first data from a first storage space corresponding to the first storage address, wherein the first data is data generated in a process in which the second coprocessor executes the second subtask;
the mapping relationship comprises an association relationship among an identifier of the second coprocessor, an identifier of the second subtask executed by the second coprocessor, and the first storage address; and
the first storage space is located in a shared memory between the first coprocessor and the second coprocessor.

16. The system according to claim 15, wherein the first coprocessor further comprises a task scheduling engine, and the task scheduling engine stores program code; and
the first coprocessor is specifically configured to run the program code stored in the task scheduling engine, to determine, based on the mapping relationship, the first storage address of the first storage space used to store the first data.

17. The system according to claim 15 or 16, wherein the first coprocessor is further configured to:
generate second data in the process of executing the first subtask, and determine a second storage address based on the mapping relationship, wherein
the mapping relationship further comprises an association relationship among an identifier of the first coprocessor, an identifier of the first subtask executed by the first coprocessor, and the second storage address, the second storage address corresponds to a second storage space, and the second storage space is used to store second data generated in the process in which the first coprocessor executes the first subtask; and
store the second data in the second storage space corresponding to the second storage address.

18. The system according to claim 15 or 16, wherein the first coprocessor is further configured to generate second data in the process of executing the first subtask, and store the second data in a second storage space, wherein the second storage space corresponds to a second storage address; and
add an association relationship among an identifier of the first coprocessor, an identifier of the first subtask executed by the first coprocessor, and the second storage address to the mapping relationship.

19. The system according to any one of claims 15 to 18, wherein the first coprocessor and the second coprocessor are deployed in a chip.

20. The system according to any one of claims 15 to 19, further comprising a main processor, wherein
the main processor is configured to deliver the first subtask to the first coprocessor, and deliver the second subtask to the second coprocessor.

21. The system according to claim 20, wherein the main processor, the first coprocessor, and the second coprocessor are deployed in different chips.

22. The system according to claim 20 or 21, wherein the main processor is further configured to deliver a start condition of the first subtask to the first coprocessor, and deliver a start condition of the second subtask to the second coprocessor;
the first coprocessor is specifically configured to: when determining that the start condition of the first subtask is met, start to execute the first subtask; and
the second coprocessor is specifically configured to: when determining that the start condition of the second subtask is met, start to execute the second subtask.

23. The system according to claim 22, wherein the first coprocessor comprises a first processor and a second processor;
the second processor is configured to: receive the start condition of the first subtask and the first subtask from the main processor, and send the first subtask to the first processor;
the second processor is further configured to: when determining that the start condition of the first subtask is met, trigger the first processor to execute the first subtask; and
the first processor is configured to execute the first subtask when triggered by the second processor.

24. A chip, wherein the chip comprises one or more first coprocessors according to any one of claims 8 to 14.
